# EUROPEAN PATENT SPECIFICATION

(11) **EP 3 884 685 B1**
(45) Date of publication and mention of the grant of the patent: **02.08.2023**
(21) Application number: 18941926.0
(22) Date of filing: 26.11.2018
(51) Int. Cl.: H04W 4/00, H04N 21/00, H04W 12/08, G06F 21/60, G06F 21/36, H04B 10/116, H04L 65/401, H04L 65/1069

(54) **USER EQUIPMENT AND METHOD OF IMAGE SENSOR COMMUNICATION OF SAME**
BENUTZERGERÄT UND VERFAHREN ZUR BILDSENSORKOMMUNIKATION DAVON
ÉQUIPEMENT UTILISATEUR ET PROCÉDÉ DE COMMUNICATION DE CAPTEUR D'IMAGE CORRESPONDANT

(43) Date of publication of application: 29.09.2021
(73) Proprietor: GUANGDONG OPPO MOBILE TELECOMMUNICATIONS CORP., LTD., Dongguan, Guangdong 523860 (CN)
(72) Inventor: CHO, Hirotake, Yokohama, Kanagawa 220- 0012 (JP)
(74) Representative: Manitz Finsterwald Patent- und Rechtsanwaltspartnerschaft mbB
(86) International application number: PCT/CN2018/117487
(87) International publication number: WO 2020/107172

(56) References cited:
- US-A1- 2009 142 068

## Description

### BACKGROUND OF DISCLOSURE

### 1. Field of the Disclosure

The present disclosure relates to the field of communication systems, and more particularly, to a user equipment (UE) and a method of image sensor communication of same.

### 2. Description of the Related Art

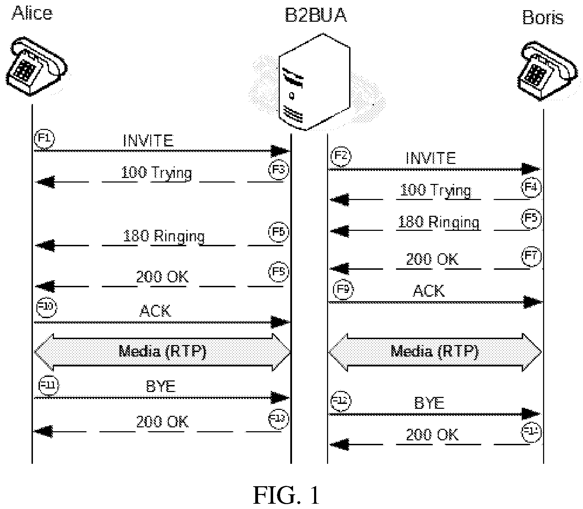

In current communication technology, for example, the Session Initiation Protocol (SIP) is a signal protocol used for initiating, maintaining, and terminating real-time sessions that include voice, video and messaging applications, as shown in FIG. 1. SIP is used for signal and controlling multimedia communication sessions in applications of Internet telephony for voice and video calls, in private IP telephone systems, in instant messaging over Internet Protocol (IP) networks as well as mobile phone calling over LTE (VoLTE).

Japanese Patent No. 4867515B2 disclosed an image processing apparatus for superimposing displaying the information of the image and the character or the like obtained by photography or the like. It discloses that CPU 20 in accordance controls and modulates the light source driving unit 22 to drive the light emitting portion 12 by changing in luminance. Thus, information of the message memory 21 is transmitted by the luminance change pattern of light from the light emitting portion 12 (step S13). It also discloses recognizing the outline of the face of the person to be registered, then set the region except the recognized contour portion as a data display frame candidate (step S313).

Japanese Patent No. JP4303087B2 disclosed a technique to transmit data signals using visible light and captures an image including said data signal using a camera for receiving the data signal and detecting the area of the data signals from the video. It discloses a data signal transmission method in a data signal transmission system having a chromatic flashing signal transmitter and a chromatic displayer. The chromatic flashing signal transmitter processes the data to convert the data to a difference of hue value.

Japanese Patent application NO. 2016149673A disclosed a server, a communication connection management method, and a communication connection management program of the short-range wireless communication. It discloses that the generating unit 20 generates a communication ID and token for use in short-range wireless communication between the first terminal 200a and the second terminal 200b (S46).

There has no technology to realizing instant communication among people who do not know each other under a circumstance where voice or gestures cannot reach. Although an Image sensor communication (ISC)system currently uses visible light pulse or light chromatic change for transmitting data, but the transmission rate of ISC is low.

It would still be a need to provide a communication system for Users able to view each other but do not know phone-number or IP-address to each other and do not want to reconnect after communicating.

US 2009/142068 A1 discloses a data communication apparatus comprising a storage unit that stores network connection information required for establishing a connection via a network with an external device, a light emission element that emits light, a light emission control unit that converts the network connection information into an optical signal and emits the optical signal from the light emission element by controlling an operation of the light emission element based upon the network connection information stored in the storage unit, and a reception unit that receives data transmitted from the external device via the network.

### SUMMARY

The invention is defined by the independent claims. An object of the present disclosure is to propose a user equipment (UE), and a method of image sensor communication of same capable of providing a communication with Users able to view each other but do not know phone-number or IP-address to each other and do not want to reconnect after communicating.

### BRIEF DESCRIPTION OF DRAWINGS

In order to more clearly illustrate the embodiments of the present disclosure or related art, the following figures will be described in the embodiments are briefly introduced. It is obvious that the drawings are merely some embodiments of the present disclosure, a person having ordinary skill in this field can obtain other figures according to these figures without paying the premise.
FIG. 1 is a schematic diagram of a prior art communication system of SIP.
FIG. 2 is a schematic diagram of method of an image sensor communication of an user equipment (UE) with non-notification mode according to an embodiment of the present disclosure.
FIG. 3 is a schematic diagram of method of an image sensor communication of an user equipment (UE) with notification mode according to an embodiment of the present disclosure.
FIG. 4 is a schematic diagram of signal pulse and sampling pulse of an user equipment (UE) with notification mode according to an embodiment of the present disclosure.
FIG. 5 is a schematic diagram of communication between user equipment (UE) with block diagram of a UE according to an embodiment of the present disclosure.
FIG. 6 is a flowchart illustrating a processing flow of an image processor of a user equipment (UE) according to an embodiment of the present disclosure.
FIG. 7 is a flowchart illustrating a method of detecting process of an image processor according to an embodiment of the present disclosure.
FIG. 8 is a flowchart illustrating a method of tracking process of an image processor according to an embodiment of the present disclosure.
FIG. 9 is a flowchart illustrating a method of decoding process of an image processor according to an embodiment of the present disclosure.
FIG. 10 is a flowchart illustrating a method of bit decoding process of an image processor according to an embodiment of the present disclosure.
FIG. 11 is a schematic diagram of communication initiation between three or more user equipment (UE) according to an embodiment of the present disclosure.
FIG. 12 is a schematic diagram of how a communication between three or more user equipment (UE) preventing spoofing according to an embodiment of the present disclosure.
FIG. 13 is a schematic diagram of how a communication between three or more user equipment (UE) preventing spoofing according to an embodiment of the present disclosure.

### DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

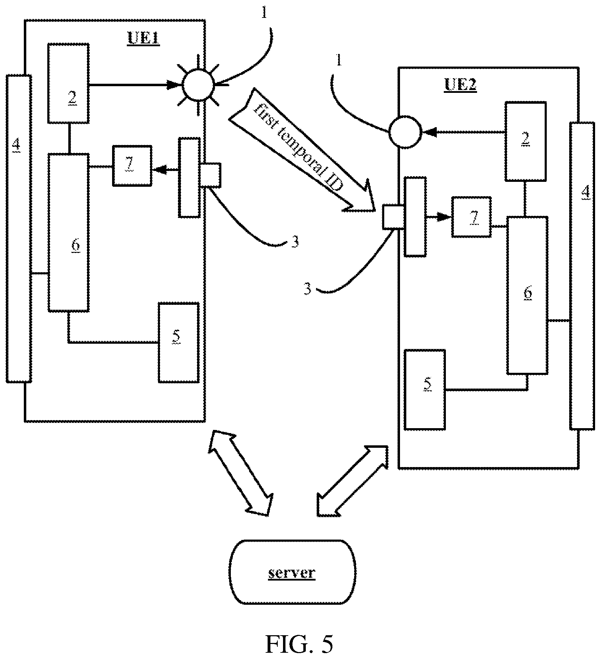

FIG. 5 illustrates that, in some embodiments, a user equipment (UE) UE1 includes a light emitter 1, a pulse driver 2 coupling to the light emitter 1, an image sensor 3, a display device 4, a transceiver 5, and a processor 6 coupling to the pulse driver 2, the image sensor 3, the transceiver 5, and the display device 4. The processor 6 is configured to control the pulse driver 2 to drive the light emitter 1 to send a first temporal identification data (ID) as a light pulse, control the image sensor 3 to receive a second temporal ID light pulse from UE2, control the transceiver 5 to transmit a communication message with the first temporal ID and the second temporal ID to a server in radio band or to receive the communication message with a second temporal ID in radio band, and compare the second temporal ID form the image sensor 3 and the second temporal ID form the transceiver 5 and control the display device 4 to show the communication message corresponding to the second temporal ID. UEland UE2 here are the same in structure but with different temporal identification data (ID).

Communication in radio band in this invention may be a mobile communication, a mobile internet communication, a walky-talky communication, et. al. The invention do not limit the system or equipment for communication in radio band, and do not limit the radio bands for communication.

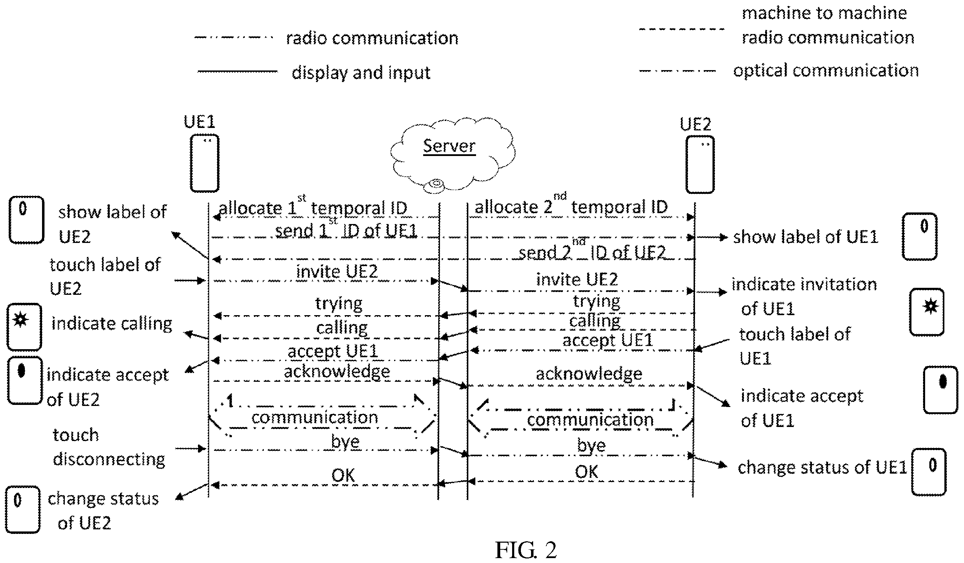

Please refer to FIG. 2 and FIG. 5. In some embodiments, the processor 6 of UE1 is configured to control the display device 4 to show a label corresponding to the second temporal ID when the image sensor 3 receives the second temporal ID light pulse from UE2.

The label in this invention maybe but not limit to a figure of a person, an icon, a name or any other data structure like drawing, picture, et. al.

In some embodiments, the transceiver 5 of UE1 is configured to receive the first temporal identification data (ID) allocated from a server.

In some embodiments, the processor 6 is configured to control the display device 4 of UE1 to show the communication message corresponding to the second temporal ID from the server when the second temporal ID form the transceiver 5 of UE1 matching the second temporal ID form the image sensor 3 of UE1.

In some embodiments, processor 6 of UE1 is configured to receive an inviting instruction of a user to send an inviting message with the first temporal ID and the second temporal ID to a server.

In some embodiments, processor 6 of UE2 is configured to receive an inviting message with the second temporal ID from the server.

In some embodiments, the processor 6 of UE2 is configured to control the display device 4 to show an inviting figure corresponding to the label of the first temporal ID, as shown in FIG. 2. On the other hand, the processor 6 of UE1 is configured to control the display device 4 to show an inviting figure corresponding to the label of the second temporal ID (not shown on the figure).

In some embodiments, the processor 6 of UE2 is configured to receive an accepting instruction of the user and to send an accepting message to the server after receiving the invite message with the first temporal ID from the server, as shown in FIG. 2. On the other hand, the processor 6 of UE1 is configured to receive an accepting instruction of the user and to send an accepting message to the server after receiving the invite message with the second temporal ID from the server (not shown on the figure).

In some embodiments, the processor 6 of UE1 is configured to control the display device 4 show an accepting figure corresponding to the label of the second temporal ID after receiving an accepting message from the server, as shown in FIG. 2. On the other hand, the processor 6 of UE2 is configured to control the display device 4 show an accepting figure corresponding to the label of the first temporal ID after receiving an accepting message from the server (not shown on the figure).

In some embodiments, the processor 6 of UE2 is configured to send a trying machine message and a calling machine message to the server when the processor 6 receiving an accepting instruction of the user, and the processor 6 of UE2 is configured to receive an acknowledge machine message from the server to establish a communication between the UE1 possessing the first temporal ID and UE2 possessing the second temporal ID, as shown in FIG. 2. On the other hand, the processor 6 of UE1 is configured to send a trying machine message and a calling machine message to the server when the processor 6 receiving an accepting instruction of the user, and the processor 6 of UE1 is configured to receive an acknowledge machine message from the server to establish a communication between the UE1 possessing the first temporal ID and UE2 possessing the second temporal ID (not shown on the figure).

In some embodiments, the processor 6 of UE1 is configured to receive a trying machine message and a calling machine message from the server, and the processor 6 of UE1 is configured to transmit a acknowledge machine message to the server to establish a communication between the UE1 possessing the first temporal ID and UE2 possessing the second temporal ID, as shown in FIG. 2. On the other hand, the processor 6 of UE2 is configured to receive a trying machine message and a calling machine message from the server, and the processor 6 of UE2 is configured to transmit a acknowledge machine message to the server to establish a communication between the UE1 possessing the first temporal ID and UE2 possessing the second temporal ID (not shown on the figure).

In some embodiments, the processor 6 of UE1 is configured to receive a disconnecting instruction of the user and to send a good-bye message to the server, as shown in FIG. 2. On the other hand, the processor 6 of UE2 is configured to receive a disconnecting instruction of the user and to send a good-bye message to the server (not shown on the figure).

In some embodiments, the processor 6 of UE2 is configured to receive a good-bye message from the server and to control the display device 4 to change the states of the label of the first temporal ID, as shown in FIG. 2. On the other hand, the processor 6 of UE1 is configured to receive a good-bye message from the server and to control the display device 4 to change the states of the label of the second temporal ID (not shown on the figure).

In some embodiments, the processor 6 of UE 2 is configured to transmit an OK machine message to the server after receiving the good-bye message, as shown in FIG. 2. On the other hand, the processor 6 of UE 1 is configured to transmit an OK machine message to the server after receiving the good-bye message (not shown on the figure).

In some embodiments, the processor 6 of UE1 is configured to control the display device 4 to change the states of the label of the second temporal ID after receiving an OK machine message from the server, as shown in FIG. 2. On the other hand, the processor 6 of UE2 is configured to control the display device 4 to change the states of the label of the first temporal ID after receiving an OK machine message from the server (not shown on the figure).

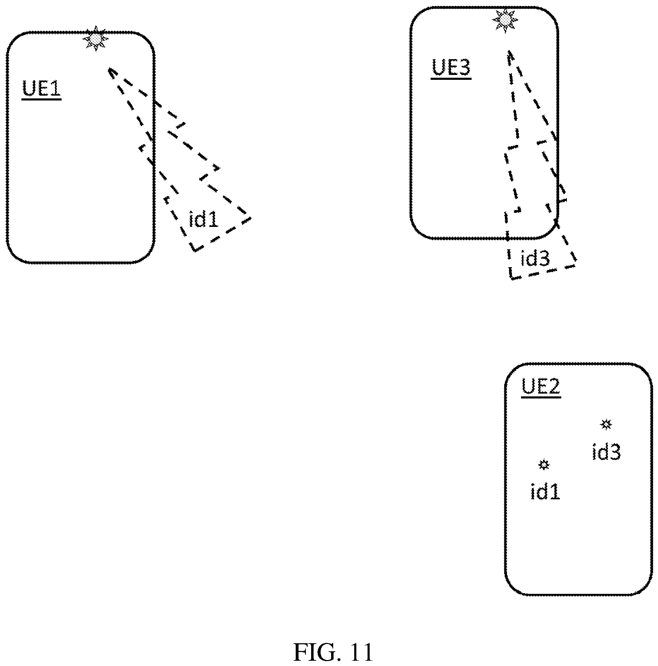

Please refer to FIG. 11. In some embodiments, the processor 6 of UE2 is configured to control the image sensor to receive a first temporal ID light pulse from the UE1, and a third temporal ID light pulse from a UE3 and to control the display device 4 to show a label correspond to the third temporal ID.

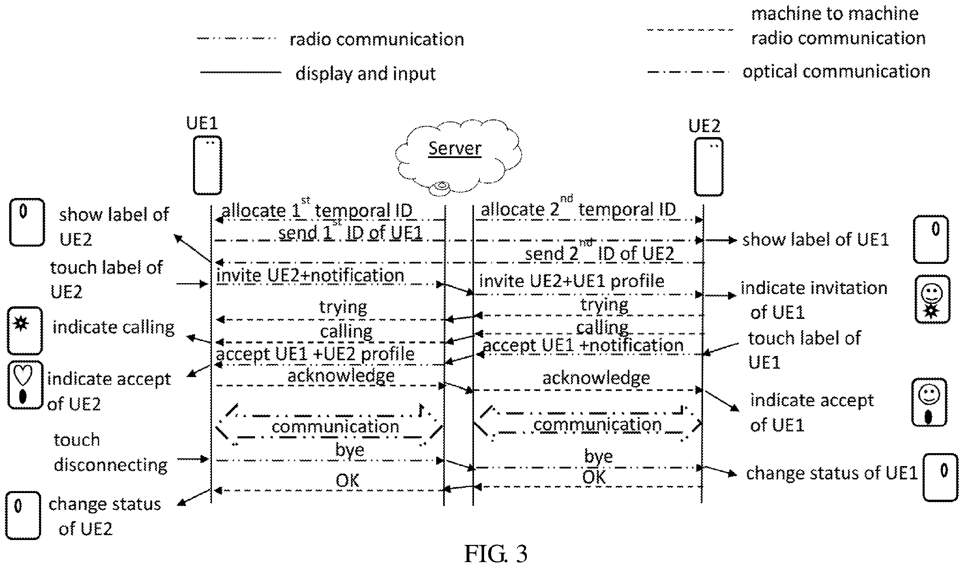

Please refer to FIG. 3. In some embodiments, the UE or the communication system has a notification mode, for example, the processor 6 of UE1 is configured to send the inviting message, the first temporal ID, and the second temporal ID accompanying with a notification mode indicator to the server, as shown in FIG. 3.

In some embodiments, the processor 6 of UE2 is configured to receive an invite message with the first temporal ID and a user profile of UE1 from the server and to control the display device 4 to show an inviting figure and the user profile corresponding to the label of the first temporal ID, as shown in FIG. 3. On the other hand, the processor 6 of UE1 is configured to receive an invite message with the second temporal ID and a user profile of UE2 from the server and to control the display device 4 to show an inviting figure and the user profile corresponding to the label of the second temporal ID (not shown on the figure).

In some embodiments, the processor 6 of UE2 is configured to send an accepting message with a notification mode indicator to the server.

In some embodiments, the processor 6 of UE1 is configured to control the display device 4 to show an accepting figure and a user profile corresponding to the label of the second temporal ID after receiving an accepting message with the user profile from the server.

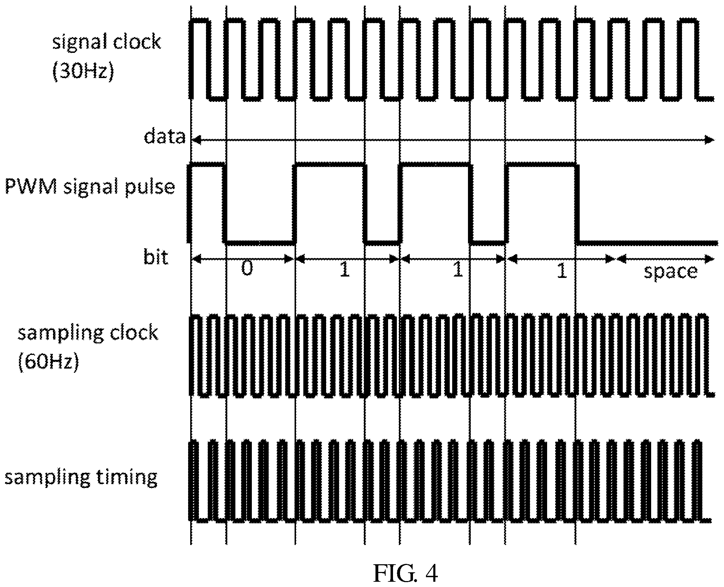

Please refer to FIG. 4. In some embodiments, a sample pulse of the image sensor 3 is narrower than the light pulse of first temporal ID or second temporal ID from the light emitter 1.

Please refer to FIG. 5. In some embodiments, the UE further comprises an image processor 7 coupling between the image sensor 3 and the processor 6.

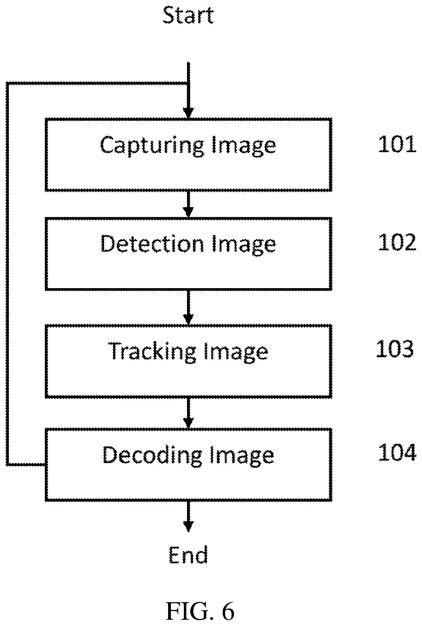

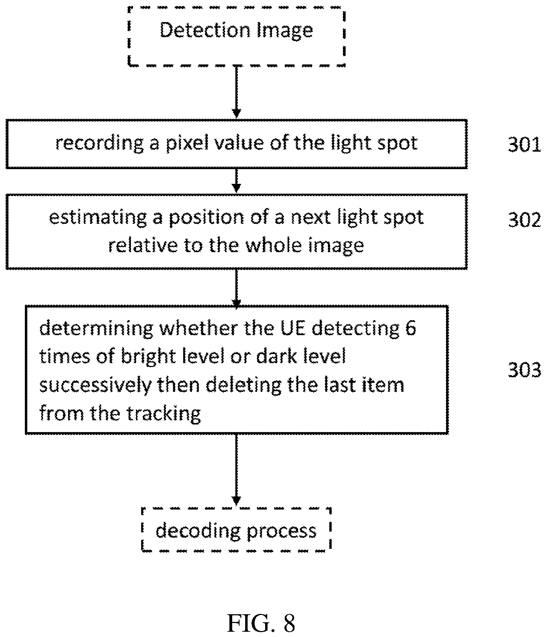

Please refer to FIG. 6 and FIG. 8. In some embodiments, the image processor 7 is configured to control the image sensor 3 to capture an image, detect the image, track the image and decode the image.

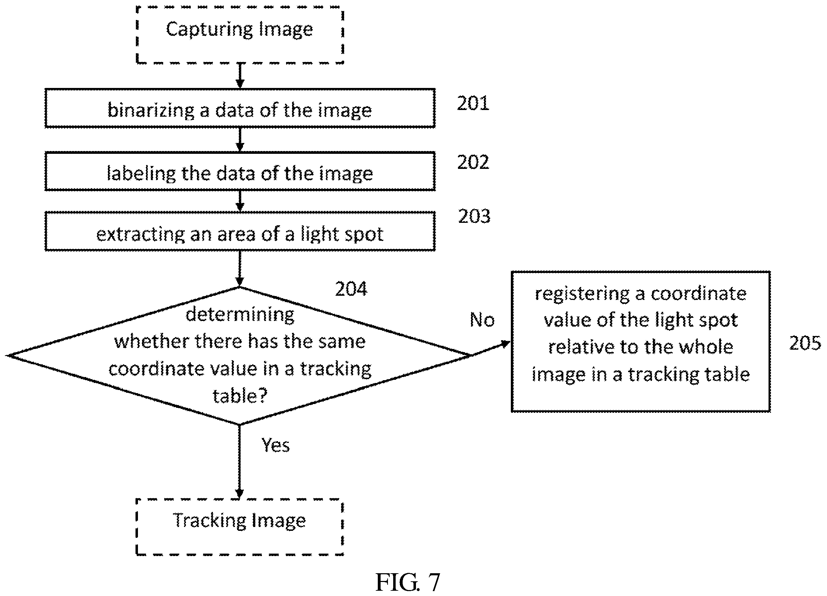

Please refer to FIG. 7. In some embodiments, a method of detecting the image of the image processor comprises the steps of: at block 201, binarizing a data of the image, at block 202, labeling the data of the image, at block 203, extracting an area of a light spot, at block 204, determining whether there has the same coordinate value in a tracking table, and going to the next process if the answer is Yes, or going to the block 205: registering a coordinate value of the light spot relative to the whole image in a tracking table if the answer is No.

Please refer to FIG. 8. In some embodiments, a method of tracking the image of the image processor comprises the steps of: at block 301, recording a pixel value of the light spot, at block 302, estimating a position of a next light spot relative to the whole image, at block 303, determining whether the UE detecting 6 times of bright level or dark level successively, and deleting the last item from the tracking.

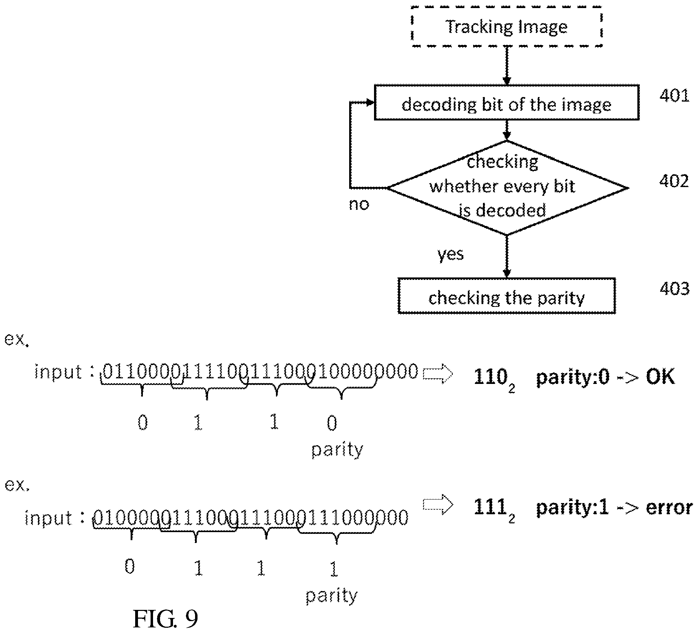

Please refer to FIG. 9. In some embodiments, a method of decoding the image of the image processor comprises the steps of: at block 401, decoding bit of the image, at block 402, checking whether every bit is decoded, and at block 403 checking the parity if every bit is decoded, or returning to block 401 if not.

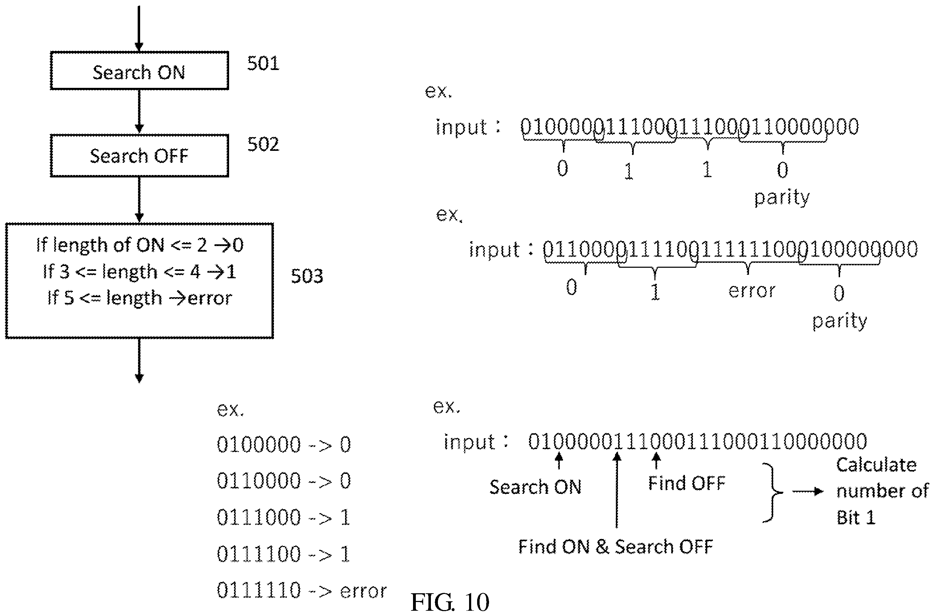

Please refer to FIG. 10, In some embodiments, the step of decoding bit comprises the steps of: at block 501, searching ON signal on a bit data of the image, at block 502, searching OFF signal on the bit data of the image, and at block 503, setting a word to be 0 when a bit length between the ON signal and the OFF signal is less than or equal to 2, setting the word to be 1 when a bit length between the ON signal and the OFF signal is larger than or equal to 3 and less than or equal to 4, and setting the word to be error when a bit length between the ON signal and the OFF signal is larger than or equal to 5.

In some embodiments, the step of searching ON signal comprises the step of finding bit of 1 after bit of 0, and the step of searching OFF signal comprises the step of finding bit of 0 after bit of 1, and the bit length between the ON signal and the OFF signal is the numbers of successive bit of 1.

Further, please refer to FIG. 2, in some embodiments, a method of an image sensor communication of a user equipment (UE) UE1 includes receiving a first temporal identification data (ID) allocated from a server, sending a first temporal ID as a light pulse, capturing a light pulse of a second temporal ID from UE2, showing a label on a display device corresponding to the second temporal ID, sending an inviting message with the first temporal ID and the second temporal ID to a server in radio band when receiving an inviting instruction of a user, and showing an accepting figure corresponding to the label of the second temporal ID on the display device after receiving an accepting message from the server.

In addition, in some embodiments, a method of an image sensor communication system of a user equipment (UE) UE1 with a server includes allocating a first temporal identification data (ID) to the UE1 by the server, receiving the first temporal ID by the UE1 in radio band, sending a first temporal ID as a light pulse by the UE1, capturing a light pulse of a second temporal ID from UE2 by the UE1, showing a label on a display device corresponding to the second temporal ID by the UE1, sending an inviting message with the first temporal ID and the second temporal ID by the UE1 to the server in radio band when receiving an inviting instruction of a user by the UE1, and showing an accepting figure corresponding to the label of the second temporal ID on the display device by the UE1 after receiving an accepting message from the server.

Please refer to FIG. 2. In addition, in some embodiments, a method of an image sensor communication system of a first user equipment (UE) UE1, a second user equipment UE2, and a server includes allocating a first temporal identification data (ID) to the UE1 by the server, allocating a second temporal identification data (ID) to the UE2 by the server, receiving the first temporal ID by the UE1 in radio band, receiving the second temporal ID by the UE2 in radio band, sending the first temporal ID as a light pulse by the UE1, capturing the light pulse of the first temporal ID by the UE2, sending the second temporal ID as a light pulse by the UE2, capturing the light pulse of the second temporal ID by the UE1, showing a label on a display device corresponding to the second temporal ID by the UE1, showing a label on a display device corresponding to the first temporal ID by the UE2, sending an inviting message with the first temporal ID and the second temporal ID to the server in radio band when receiving an inviting instruction of a user by the UE1, transmitting the inviting message with the first temporal ID to the UE2 by the server in radio band, showing an inviting figure corresponding to the label of the first temporal ID on the display device by the UE2, sending an accepting message to the server after receiving an accepting instruction of the user by the UE2, transmitting the accepting message to the UE1 by the server, and showing an accepting figure corresponding to the label of the second temporal ID on the display device by the UE1 after receiving an accepting message from the server.

In some embodiments, The method further comprises the steps of sending a trying machine message and a calling machine message to the server by the UE2, transmitting the trying machine message and the calling machine message to the UE1 by the server, receiving the trying machine message and the calling machine message from the server by the UE1, showing a calling figure corresponding to the label of the second temporal ID on the display device by the UE1, sending an acknowledge machine message to the server by the UE1, transmitting the acknowledge machine message to the UE2 by the server, receiving an acknowledge machine message from the server by the UE2, and establishing a communication between the UE1 and the UE2.

In some embodiments, the method of claim further comprises the steps of sending a good-bye message to the server after receiving a disconnecting instruction of the user by the UE1, transmitting the good-bye message to the UE2 by the server, receiving the good-bye message from the server and changing the states of the label of the first temporal ID on the display device by the UE2, sending an OK machine message to the server by the UE2, transmitting the OK machine message to the UE1 by the server, changing the states of the label corresponding to the second temporal ID by the UE1 after receiving the OK machine message from the server, and disconnecting the communication.

In some embodiments, the step of sending an inviting message with the first temporal ID and the second temporal ID to the server in radio band when receiving an inviting instruction of a user by the UE1 further comprising the step of sending a notification mode indicator accompanying with the inviting message, the first temporal ID, and the second temporal ID to the server by the UE1.

In some embodiments, the method further comprises the steps of, transmitting the invite message with the first temporal ID and a user profile to the UE2, receiving the invite message with the first temporal ID and the user profile from the server by the UE2, and showing an inviting figure and the user profile corresponding to the label of the first temporal ID on the display device by the UE2.

In some embodiments, the method further comprises the step of sending an accepting message with a notification mode indicator to the server by the UE2.

In some embodiments, the method further comprises the steps of, transmitting the accepting message with a user profile to the UE1 by the server, receiving the accepting message with the user profile from the server by the UE1, and showing an accepting figure and the user profile corresponding to the label of the second temporal ID on the display device by the UE1.

In some embodiments, a sample pulse of the step of capturing a light pulse of the first temporal ID by the UE2 or capturing the light pulse of the second temporal ID by the UE1 is narrower than the light pulse of the step of sending the first temporal ID as a light pulse by the UE1 or sending the second temporal ID as a light pulse by the UE2.

Please refer to FIG. 11. In some embodiments, the method further comprising the steps of capturing a third temporal ID light pulse from a UE3 by the UE2, and showing a label correspond to the third temporal ID on the display device by the UE2.

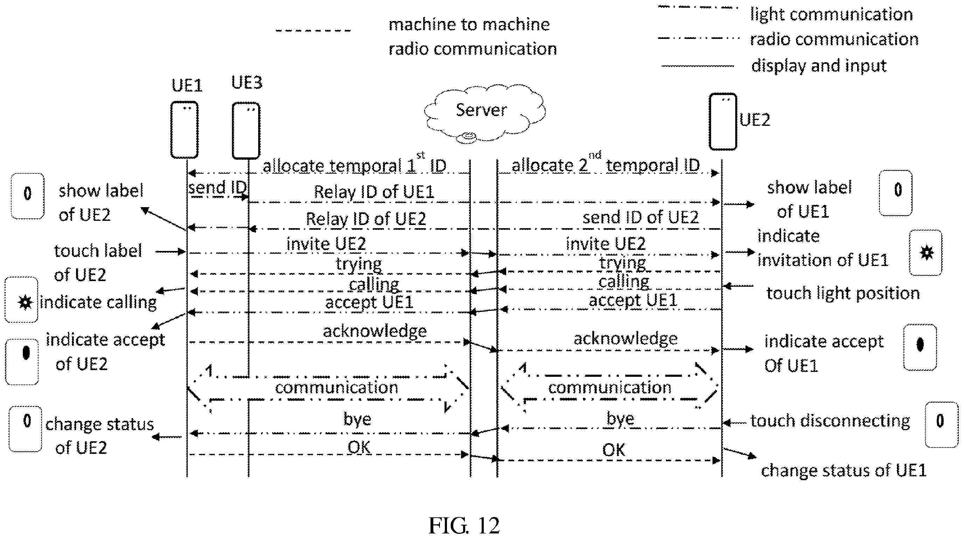

Please refer to FIG. 12. In some application, if someone near UE1 want to spoof, for example, UE3 relay the light pulse of first temporal ID to UE2, UE1 and UE2 can still communication in radio band without interruption of UE3.

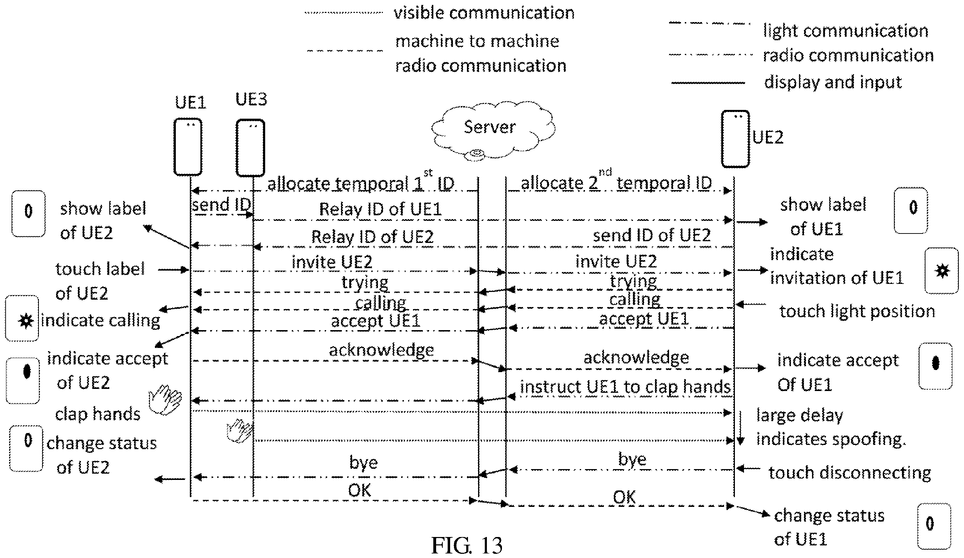

Please refer to FIG. 13. In some application, user of UE2 may ask user of UE1 to do something visual under the image sensor communication, for example, ask UE1 to clap hands via the communication in radio band. Then user of UE3 has no way to know this requirement to response or he may guess and do the same thing following user of UE1. User of UE2 may recognize who is communicating with him.

The embodiments aim to provide a UE, a communication method and a communication system with Users able to view each other but do not know phone-number or IP-address to each other and do not want to reconnect after communicating.

Benefits of communication via optical signal and radio band include:
1. raising the communication speed via radio band under the image sensor communication.
2.enhancing the safety of communication by preventing spoofing.

In the embodiment of the present disclosure, a user equipment (UE), and a method of an image sensor communication of same are provided. The method of an image sensor communication of the UE includes receiving a first temporal identification data (ID) allocated from a server, sending a first temporal ID as a light pulse, capturing a light pulse of a second temporal ID from another UE, showing a label on a display device corresponding to the second temporal ID, sending an inviting message with the first temporal ID and the second temporal ID to a server in radio band when receiving an inviting instruction of a user, and showing an accepting figure corresponding to the label of the second temporal ID on the display device after receiving an accepting message from the server, so as to provide a simple, fast, and safety UE, communication method and communication system with users able to view each other but do not know phone-number or IP-address to each other and do not want to reconnect after communicating.

A person having ordinary skill in the art understands that each of the units, algorithm, and steps described and disclosed in the embodiments of the present disclosure are realized using electronic hardware or combinations of software for computers and electronic hardware. Whether the functions run in hardware or software depends on the condition of application and design requirement for a technical plan.

A person having ordinary skill in the art can use different ways to realize the function for each specific application while such realizations should not go beyond the scope of the present disclosure. It is understood by a person having ordinary skill in the art that he/she can refer to the working processes of the system, device, and unit in the above-mentioned embodiment since the working processes of the above-mentioned system, device, and unit are basically the same. For easy description and simplicity, these working processes will not be detailed.

It is understood that the disclosed system, device, and method in the embodiments of the present disclosure can be realized with other ways. The above-mentioned embodiments are exemplary only. The division of the units is merely based on logical functions while other divisions exist in realization. It is possible that a plurality of units or components are combined or integrated in another system. It is also possible that some characteristics are omitted or skipped. On the other hand, the displayed or discussed mutual coupling, direct coupling, or communicative coupling operate through some ports, devices, or units whether indirectly or communicatively by ways of electrical, mechanical, or other kinds of forms.

The units as separating components for explanation are or are not physically separated. The units for display are or are not physical units, that is, located in one place or distributed on a plurality of network units. Some or all of the units are used according to the purposes of the embodiments. Moreover, each of the functional units in each of the embodiments can be integrated in one processing unit, physically independent, or integrated in one processing unit with two or more than two units.

If the software function unit is realized and used and sold as a product, it can be stored in a readable storage medium in a computer. Based on this understanding, the technical plan proposed by the present disclosure can be essentially or partially realized as the form of a software product. Or, one part of the technical plan beneficial to the conventional technology can be realized as the form of a software product. The software product in the computer is stored in a storage medium, including a plurality of commands for a computational device (such as a personal computer, a server, or a network device) to run all or some of the steps disclosed by the embodiments of the present disclosure. The storage medium includes a USB disk, a mobile hard disk, a read-only memory (ROM), a random-access memory (RAM), a floppy disk, or other kinds of media capable of storing program codes.

## Claims

1. A user equipment, UE, in an image sensor communication system, the UE comprising:
a light emitter (1);
a pulse driver (2) coupling to the light emitter (1);
an image sensor (3);
a display device (4);
a transceiver (5); and
a processor (6) coupling to the pulse driver (2), the image sensor (3), the transceiver (5), and the display device (4),
wherein the processor (6) is configured to:
control the pulse driver (2) to drive the light emitter (1) to send to a first another UE a first temporal identification data, ID, as a light pulse;
control the image sensor (3) to receive a light pulse of a second temporal ID from the first another UE:
control the transceiver (5) to transmit a first communication message with the first temporal ID and the second temporal ID of the first another UE to a server in radio band and to receive a second communication message with the second temporal ID of the first another UE from the server in radio band; and
compare the second temporal ID from the image sensor (3) and the second temporal ID received by the transceiver (5) and control the display device (4) to show the second communication message corresponding to the second temporal ID in case of matching of the second temporal ID.

2. The UE of claim 1, wherein the processor (6) is configured to control the display device (4) to show a label corresponding to the second temporal ID when the image sensor (3) receives the second temporal ID from the first another UE.

3. The UE of claim 1, wherein the transceiver (5) is configured to receive the first temporal ID allocated from the server.

4. The UE of claim 1, wherein the processor (6) is configured to control the display device (4) to show the second communication message corresponding to the second temporal ID when the second temporal ID received by the transceiver (5) matches the second temporal ID from the image sensor (3).

5. The UE of any one of claims 1 to 4, wherein a sample pulse of the image sensor (3) is narrower than the light pulse of first temporal ID from the light emitter (1).

6. The UE of any one of claims 1 to 5, wherein the processor (6) is configured to control the image sensor (3) to receive a third temporal ID light pulse from a second another UE and to control the display device (4) to show a label corresponding to the third temporal ID.

7. The UE of any of claims 1 to 6, further comprising an image processor (7) coupling between the image sensor (3) and the processor (6),
wherein the image processor (7) is configured to:
control the image sensor (3) to capture an image;
detect the image;
track the image; and
decode the image.

8. A method of an image sensor communication performed by a user equipment, UE, the method comprising:
receiving a first temporal identification data, ID, allocated from a server in radio band;
sending, by a light emitter of the UE, to a first another UE the first temporal ID as a light pulse;
capturing a light pulse of a second temporal ID from the first another UE;
showing a label on a display device of the UE corresponding to the second temporal ID of the first another UE;
sending an inviting message with the first temporal ID and the second temporal ID of the first another UE to the server in radio band when receiving an inviting instruction of a user of the UE; and
showing an accepting figure corresponding to the label of the second temporal ID of Z the first another UE invited by the user on the display device after receiving an accepting message from the server including the second temporal ID of the first another UE corresponding to the received second temporal ID.

9. The method of claim 8, further comprising the steps of:
receiving a trying machine message and a calling machine message from the server, and transmitting an acknowledge machine message to the server to establish a communication between the UE and the first another UE invited by the user; and
showing a calling figure corresponding to the label of the second temporal ID of the first another UE invited by the user on the display device after receiving a calling machine message from the server.

10. The method of claim 9, further comprising the steps of:
sending a good-bye message to the server after receiving a disconnecting instruction of the user;
changing the states of the label corresponding to the second temporal ID of the first another UE invited by the user after receiving an OK machine message from the server; and
disconnecting the communication.

11. The method of any one of claims 8 to 10, further comprising the steps of:
receiving an inviting message with a third temporal ID of a second another UE from the server; and
showing an inviting figure corresponding to the label of the third temporal ID of the second another UE on the display device.

12. The method of claim 11, further comprising the steps of:
sending an accepting message to the server after receiving an accepting instruction of the user;
sending a trying machine message and a calling machine message to the server; and
receiving an acknowledge machine message from the server to establish a communication between the UE and the second another UE invited by the user of the second another UE.

13. The method of claim 12, further comprising the steps of:
receiving a good-bye message from the server and changing the states of the label of the third temporal ID of the second another UE on the display device:
transmitting an OK machine message to the server; and
disconnecting the communication.

14. The method of any one of claims 8 to 13, wherein the step of sending an inviting message with the first temporal ID and the second temporal ID of the first another UE to the server in radio band when receiving an inviting instruction of the user of the UE further comprises the step of sending a notification mode indicator accompanying with the inviting message, the first temporal ID, and the second temporal ID of the first another UE to the server

15. The method of any one of claims 8 to 14, further comprising the steps of:
sending an accepting message with a notification mode indicator to the server; receiving an accepting message with a user profile of the first another UE from the server; and showing an accepting figure and the user profile corresponding to the label of the second temporal ID of the first another UE on the display device.

## Patentansprüche

1. Benutzergerät, UE, in einem Bildsensorkommunikationssystem, wobei das UE umfasst:
einen Lichtsender (1);
einen mit dem Lichtsender (1) gekoppelten Impulstreiber (2);
einen Bildsensor (3);
eine Anzeigevorrichtung (4);
einen Sender-Empfänger (5); und
einen Prozessor (6), der mit dem Impulstreiber (2), dem Bildsensor (3), dem Sender-Empfänger (5) und der Anzeigevorrichtung (4) gekoppelt ist,
wobei der Prozessor (6) dazu konfiguriert ist:
den Impulstreiber (2) so zu steuern, dass er den Lichtsender (1) so ansteuert, dass er an ein erstes anderes UE erste zeitliche Identifikationsdaten, ID, als Lichtimpuls sendet;
den Bildsensor (3) so zu steuern, dass er aus dem ersten anderen UE einen Lichtimpuls mit zweiten zeitlichen ID empfängt;
den Sender-Empfänger (5) so zu steuern, dass er eine erste Kommunikationsnachricht mit den ersten zeitlichen ID und den zweiten zeitlichen ID des ersten anderen UE an einen Server im Funkband sendet und eine zweite Kommunikationsnachricht mit den zweiten zeitlichen ID des ersten anderen UE aus dem Server im Funkband empfängt; und
die zweiten zeitlichen ID aus dem Bildsensor (3) und die aus dem Sender-Empfänger (5) empfangenen zweiten zeitlichen ID zu vergleichen und die Anzeigevorrichtung (4) so zu steuern, dass sie die zweite Kommunikationsnachricht anzeigt, die den zweiten zeitlichen ID entspricht, wenn die zweiten zeitlichen ID übereinstimmen.

2. UE gemäß Anspruch 1, wobei der Prozessor (6) dazu konfiguriert ist, die Anzeigevorrichtung (4) so zu steuern, dass sie eine Kennung anzeigt, die den zweiten zeitlichen ID entspricht, wenn der Bildsensor (3) die zweiten zeitlichen ID aus dem ersten anderen UE empfängt.

3. UE gemäß Anspruch 1, wobei der Sender-Empfänger (5) dazu konfiguriert ist, die zugewiesenen ersten zeitlichen ID aus dem Server zu empfangen.

4. UE gemäß Anspruch 1, wobei der Prozessor (6) dazu konfiguriert ist, die Anzeigevorrichtung (4) so zu steuern, dass sie die zweite Kommunikationsnachricht, die den zweiten zeitlichen ID entspricht, anzeigt, wenn die durch den Sender-Empfänger (5) empfangenen zweiten zeitlichen ID mit den zweiten zeitlichen ID aus dem Bildsensor (3) übereinstimmen.

5. UE gemäß einem der Ansprüche 1 bis 4, wobei ein Abtastimpuls des Bildsensors (3) schmaler als der Lichtimpuls der ersten zeitlichen ID des Lichtsenders (1) ist.

6. UE gemäß einem der Ansprüche 1 bis 5, wobei der Prozessor (6) dazu konfiguriert ist, den Bildsensor (3) so zu steuern, dass er einen dritten zeitlichen ID-Lichtimpuls aus einem zweiten anderen UE empfängt, und die Anzeigevorrichtung (4) so zu steuern, dass sie eine Kennung anzeigt, die den dritten zeitlichen ID entspricht.

7. UE gemäß einem der Ansprüche 1 bis 6, ferner umfassend einen Bildprozessor (7), der zwischen dem Bildsensor (3) und dem Prozessor (6) gekoppelt ist, wobei der Bildprozessor (7) dazu konfiguriert ist:
den Bildsensor (3) so zu steuern, dass er ein Bild aufnimmt;
das Bild erkennt;
das Bild verfolgt; und
das Bild dekodiert.

8. Verfahren einer Bildsensorkommunikation, das durch ein Benutzergerät, UE, ausgeführt wird, wobei das Verfahren umfasst:
Empfangen von ersten zugeordneten zeitlichen Identifikationsdaten, ID, aus einem Server in einem Funkband;
Senden der ersten zeitlichen ID als Lichtimpuls durch einen Lichtsender des UE an ein erstes anderes UE;
Erfassen eines Lichtimpulses von zweiten zeitlichen ID aus dem ersten anderen UE;
Anzeigen einer Kennung auf einer Anzeigevorrichtung des UE, die den zweiten zeitlichen ID des ersten anderen UE entspricht;
Senden einer Einladungsnachricht mit den ersten zeitlichen ID und den zweiten zeitlichen ID des ersten anderen UE an den Server im Funkband, wenn eine Einladungsanweisung eines Benutzers des UE empfangen wird; und
Anzeigen eines Annahmezeichens, das der Kennung der zweiten zeitlichen ID des ersten anderen UE entspricht, das durch den Benutzer eingeladen wurde, auf der Anzeigevorrichtung, nachdem eine Annahmenachricht aus dem Server empfangen wurde, die die zweiten zeitlichen ID des ersten anderen UE enthält, das den empfangenen zweiten zeitlichen ID entspricht.

9. Verfahren gemäß Anspruch 8, ferner umfassend die Schritte:
Empfangen einer Versuchsmaschinennachricht und einer Anrufmaschinennachricht aus dem Server und Senden einer Bestätigungsmaschinennachricht an den Server, um eine Kommunikation zwischen dem UE und dem ersten anderen UE herzustellen, das durch den Benutzer eingeladen wird; und
Anzeigen eines Rufzeichens, das der Kennung der zweiten zeitlichen ID des ersten anderen UE entspricht, das durch den Benutzer eingeladen wird, auf der Anzeigevorrichtung, nachdem eine Rufmaschinennachricht aus dem Server empfangen wurde.

10. Verfahren gemäß Anspruch 9, ferner umfassend die Schritte:
Senden einer Abschiedsnachricht an den Server, nachdem eine Trennanweisung des Benutzers empfangen wurde;
Ändern der Zustände der Kennung, die den zweiten zeitlichen ID des ersten anderen UE entspricht, das durch den Benutzer eingeladen wurde, nachdem eine OK-Maschinennachricht aus dem Server empfangen wurde; und
Trennen der Kommunikation.

11. Verfahren gemäß einem der Ansprüche 8 bis 10, ferner umfassend die Schritte:
Empfangen einer Einladungsnachricht mit dritten zeitlichen ID eines zweiten anderen UE aus dem Server; und
Anzeigen eines Einladungszeichens, das der Kennung der dritten zeitlichen ID des zweiten anderen UE entspricht, auf der Anzeigevorrichtung.

12. Verfahren gemäß Anspruch 11, ferner umfassend die Schritte:
Senden einer Annahmenachricht an den Server, nachdem eine Annahmeanweisung des Benutzers empfangen wurde;
Senden einer Versuchsmaschinennachricht und einer Rufmaschinennachricht an den Server; und
Empfangen einer Bestätigungsmaschinennachricht aus dem Server, um eine Kommunikation zwischen dem UE und dem zweiten anderen UE herzustellen, das durch den Benutzer des zweiten anderen UE eingeladen wird.

13. Verfahren gemäß Anspruch 12, ferner umfassend die Schritte:
Empfangen einer Abschiedsnachricht aus dem Server und Ändern der Zustände der Kennung der dritten zeitlichen ID des zweiten anderen UE auf der Anzeigevorrichtung;
Übermitteln einer OK-Maschinennachricht an den Server; und
Trennen der Kommunikation.

14. Verfahren gemäß einem der Ansprüche 8 bis 13, wobei der Schritt des Sendens einer Einladungsnachricht mit den ersten zeitlichen ID und den zweiten zeitlichen ID des ersten anderen UE an den Server im Funkband, wenn eine Einladungsanweisung des Benutzers des UE empfangen wird, ferner den Schritt des Sendens eines Benachrichtigungsmodusindikators, der mit der Einladungsnachricht, den ersten zeitlichen ID und den zweiten zeitlichen ID des ersten anderen UE einhergeht, an den Server umfasst.

15. Verfahren gemäß einem der Ansprüche 8 bis 14, ferner umfassend die Schritte:
Senden einer Annahmenachricht mit einem Benachrichtigungsmodusindikator an den Server;
Empfangen einer Annahmenachricht mit einem Benutzerprofil des ersten anderen UE aus dem Server; und
Anzeigen eines Annahmezeichens und des Benutzerprofils, die der Kennung der zweiten zeitlichen ID des ersten anderen UE entsprechen, auf der Anzeigevorrichtung.

## Revendications

1. Équipement d'utilisateur, UE, dans un système de communication de capteur d'image, l'UE comportant :
un émetteur lumineux (1) :
un excitateur (2) d'impulsions se couplant à l'émetteur lumineux (1) ;
un capteur (3) d'image ;
un dispositif (4) d'affichage ;
un émetteur-récepteur (5) ; et
un processeur (6) se couplant à l'excitateur (2) d'impulsions, au capteur (3) d'image, à l'émetteur-récepteur (5), et au dispositif (4) d'affichage,
le processeur (6) étant configuré pour :
commander l'excitateur (2) d'impulsions pour exciter l'émetteur lumineux (1) afin d'envoyer à un premier autre UE une première donnée d'identification temporelle, ID, comme une impulsion lumineuse :
commander le capteur (3) d'image pour recevoir une impulsion lumineuse d'un deuxième identifiant temporel en provenance du premier autre UE :
commander l'émetteur-récepteur (5) pour transmettre un premier message de communication avec le premier identifiant temporel et le deuxième identifiant temporel du premier autre UE à un serveur dans une bande radio et pour recevoir un deuxième message de communication avec le deuxième identifiant temporel du premier autre UE en provenance du serveur dans une bande radio ; et
comparer le deuxième identifiant temporel provenant du capteur (3) d'image et le deuxième identifiant temporel reçu par l'émetteur-récepteur (5) et commander le dispositif (4) d'affichage pour présenter le deuxième message de communication correspondant au deuxième identifiant temporel en cas de concordance du deuxième identifiant temporel.

2. UE selon la revendication 1, le processeur (6) étant configuré pour commander le dispositif (4) d'affichage afin de présenter une étiquette correspondant au deuxième identifiant temporel lorsque le capteur (3) d'image reçoit le deuxième identifiant temporel en provenance du premier autre UE.

3. UE selon la revendication 1, l'émetteur-récepteur (5) étant configuré pour recevoir le premier identifiant temporel attribué en provenance du serveur.

4. UE selon la revendication 1, le processeur (6) étant configuré pour commander le dispositif (4) d'affichage afin de présenter le deuxième message de communication correspondant au deuxième identifiant temporel lorsque le deuxième identifiant temporel reçu par l'émetteur-récepteur (5) concorde avec le deuxième identifiant temporel provenant du capteur (3) d'image.

5. UE selon l'une quelconque des revendications 1 à 4, une impulsion d'échantillon du capteur (3) d'image étant plus étroite que l'impulsion lumineuse de premier identifiant temporel provenant de l'émetteur lumineux (1) .

6. UE selon l'une quelconque des revendications 1 à 5, le processeur (6) étant configuré pour commander le capteur (3) d'image afin de recevoir une impulsion lumineuse de troisième identifiant temporel provenant d'un deuxième autre UE et pour commander le dispositif (4) d'affichage afin de présenter une étiquette correspondant au troisième identifiant temporel.

7. UE selon l'une quelconque des revendications 1 à 6, comportant en outre un processeur (7) d'images se couplant entre le capteur (3) d'image et le processeur (6),
le processeur (7) d'images étant configuré pour :
commander le capteur (3) d'image pour capturer une image ;
détecter l'image ;
suivre l'image ; et
décoder l'image.

8. Procédé de communication de capteur d'image, réalisé par un équipement d'utilisateur, UE, le procédé comportant les étapes consistant à :
recevoir une première donnée d'identification, ID, temporelle attribuée à partir d'un serveur dans une bande radio ;
faire envoyer à un premier autre UE, par un émetteur lumineux de l'UE, le premier identifiant temporel comme une impulsion lumineuse ;
capturer une impulsion lumineuse d'un deuxième identifiant temporel en provenance du premier autre UE ;
présenter une étiquette sur un dispositif d'affichage de l'UE correspondant au deuxième identifiant temporel du premier autre UE ;
envoyer un message d'invitation avec le premier identifiant temporel et le deuxième identifiant temporel du premier autre UE au serveur dans une bande radio lors de la réception d'une instruction d'invitation d'un utilisateur de l'UE ; et
présenter une figure d'acceptation correspondant à l'étiquette du deuxième identifiant temporel du premier autre UE invité par l'utilisateur sur le dispositif d'affichage après avoir reçu un message d'acceptation en provenance du serveur comprenant le deuxième identifiant temporel du premier autre UE correspondant au deuxième identifiant temporel reçu.

9. Procédé selon la revendication 8, comportant en outre les étapes consistant à :
recevoir un message machine d'essai et un message machine d'appel en provenance du serveur, et transmettre un message machine d'acquittement au serveur pour établir une communication entre l'UE et le premier autre UE invité par l'utilisateur ; et
présenter une figure d'appel correspondant à l'étiquette du deuxième identifiant temporel du premier autre UE invité par l'utilisateur sur le dispositif d'affichage après avoir reçu un message machine d'appel en provenance du serveur.

10. Procédé selon la revendication 9, comportant en outre les étapes consistant à :
envoyer un message d'au-revoir au serveur après avoir reçu une instruction de déconnexion de l'utilisateur ;
changer les états de l'étiquette correspondant au deuxième identifiant temporel du premier autre UE invité par l'utilisateur après avoir reçu un message machine OK en provenance du serveur ; et
déconnecter la communication.

11. procédé selon l'une quelconque des revendications 8 à 10, comportant en outre les étapes consistant à :
recevoir un message d'invitation avec un troisième identifiant temporel d'un deuxième autre UE en provenance du serveur ; et
présenter une figure d'invitation correspondant à l'étiquette du troisième identifiant temporel du deuxième autre UE sur le dispositif d'affichage.

12. Procédé selon la revendication 11, comportant en outre les étapes consistant à :
envoyer un message d'acceptation au serveur après avoir reçu une instruction d'acceptation de l'utilisateur ;
envoyer un message machine d'essai et un message machine d'appel au serveur ; et
recevoir un message machine d'acquittement en provenance du serveur pour établir une communication entre l'UE et le deuxième autre UE invité par l'utilisateur du deuxième autre UE.

13. Procédé selon la revendication 12, comportant en outre les étapes consistant à :
recevoir un message d'au-revoir en provenance du serveur et changer les états de l'étiquette du troisième identifiant temporel du deuxième autre UE sur le dispositif d'affichage ;
transmettre un message machine OK au serveur ; et
déconnecter la communication.

14. procédé selon l'une quelconque des revendications 8 à 13, l'étape d'envoi d'un message d'invitation avec le premier identifiant temporel et le deuxième identifiant temporel du premier autre UE au serveur dans une bande radio lors de la réception d'une instruction d'invitation de l'utilisateur de l'UE comportant en outre l'étape d'envoi d'un indicateur de mode de notification accompagnant le message d'invitation, le premier identifiant temporel, et le deuxième identifiant temporel du premier autre UE au serveur.

15. procédé selon l'une quelconque des revendications 8 à 14, comportant en outre les étapes consistant à :
envoyer un message d'acceptation avec un indicateur de mode de notification au serveur ;
recevoir un message d'acceptation avec un profil d'utilisateur du premier autre UE en provenance du serveur ; et
présenter une figure d'acceptation et le profil d'utilisateur correspondant à l'étiquette du deuxième identifiant temporel du premier autre UE sur le dispositif d'affichage.
